# EUROPEAN PATENT APPLICATION

(11) **EP 3 417 966 A1**
(43) Date of publication of application: **26.12.2018**
(21) Application number: 18173750.3
(22) Date of filing: 23.05.2018
(51) Int. Cl.: B23C 3/12, B23C 1/20, B23C 9/00, B23D 71/00, B23D 71/10, B23Q 9/00

(54) **TOOL COMPRISING A BURR CUTTER AND A GUIDE**

(30) Priority: 23.06.2017 GB 201710077
(71) Applicant: Rolls-Royce plc, London SW1E 6AT (GB)
(72) Inventor: Bagnall, Adam, Derby, Derbyshire DE24 8BJ (GB)
(74) Representative: Rolls-Royce plc

(57) **Abstract**

A tool comprising a burr cutter 34 and a guide 2, the guide 2 comprising: a body portion 4 having first and second guide surfaces 12a, 12b which are spaced from one another to define a slot 14 between the first and second guide surfaces 12a, 12b; a bearing 32a, 32b for rotatably mounting the body portion 4 to a shank 38 of the burr cutter 34 with a cutting head 36 of the burr cutter 34 adjacent the slot 14; wherein the first and second guide surfaces 12a, 12b and the bearing 32a, 32b are positioned relative to one another such that the first and second guide surfaces 12a, 12b are tangential to the cutting head 36 of the burr cutter 34.

## Description

The disclosure relates to a guide for a burr cutter.

During the manufacture of a fan case assembly, vane aerofoils are welded to aerofoil stubs which project from an inner ring. These welds extend from a leading edge to a trailing edge of the aerofoil, and present a non-uniform surface which deviates significantly from the intended aerofoil shape especially around the leading and trailing edges.

The weld around the leading (and trailing) edge may be dressed using a cylindrical ball-ended burr-cutter (also known as a "rotary file") mounted in a hand-held rotary tool (also known as a "die cutter") to provide a clean surface prior to X-ray inspection. The dressing is then completed with an abrasive cloth wheel (also known as a "flap-wheel") again mounted in a hand-held rotary tool. Control of both of these operations is reliant totally on operator skill.

Even with skilled operators, the cylindrical ball-ended burr cutter can remove excessive material leaving the dressed weld material below the adjacent parent material and this can be exacerbated by the abrasive cloth wheel. The removal of excessive material may lead to an undesirable stress concentration which could compromise engine structural integrity. Further, the dressed weld does not conform to the adjacent aerofoil surfaces, particularly over the leading edge. This loss of the intended aerofoil shape in the very critical leading edge region has a detrimental effect on engine performance, efficiency and Specific Fuel Consumption.

It is therefore desirable to address the issues associated with conventional weld dressing in order to reduce reliance on operator skill.

In accordance with an aspect, there is provided a tool comprising a burr cutter and a guide for the burr cutter, wherein:
the burr cutter comprises a cutting head and a shank; and
the guide comprises:
   a body portion having first and second guide surfaces which are spaced from one another to define a slot between the first and second guide surfaces;
   a bearing for rotatably mounting the body portion to the shank of the burr cutter with the cutting head of the burr cutter adjacent the slot;
   wherein the first and second guide surfaces and the bearing are positioned relative to one another such that the first and second guide surfaces are flush with the cutting head of the burr cutter and tangential to the part of the cutting head that lies in the plane of the first and second guide surfaces.

The adjustment mechanism may comprise a sleeve which is received by the body portion, wherein the sleeve comprises a throughbore for receiving the bearing and wherein the throughbore is eccentrically positioned within the sleeve such that rotation of the sleeve relative to the body portion translates the rotational axis of the bearing relative to the first and second guide surfaces.

The sleeve may have a circular outer profile and the body portion may comprise a complementary circular recess for receiving the sleeve.

The circular outer profile of the sleeve may comprise first and second flat portions, and the adjusting mechanism may further comprise first and second adjustment screws which pass through the body portion and engage the first and second flat portions of the sleeve so as to cause the sleeve to rotate relative to the body portion.

The body portion may define a exterior surface which extends from the first guide surface to the second surface so as to form a throughbore for receiving the cutting head, the throughbore being open at the slot.

The exterior surface may be conical.

According to an aspect, there is provided a method for manufacturing an aerofoil for a gas turbine engine comprising:
manufacturing an unfinished aerofoil; and
removing unwanted material from the unfinished aerofoil using a tool as defined and/or claimed herein.

The step of manufacturing the unfinished aerofoil may comprise welding an aerofoil portion onto a stub portion. The step of removing unwanted material may comprise removing excess material resulting from such a welding step.

For a better understanding of the disclosure, and to show more clearly how it may be carried into effect, reference will now be made, by way of example, to the accompanying drawings, in which:-
- Figure 1: is a perspective view of a guide for a burr cutter;
- Figure 2: is a cross-sectional view of the guide;
- Figure 3: is a rear-end view of the guide;
- Figure 4: is a perspective view of a sleeve of the guide;
- Figure 5: is a side view of the of the guide;
- Figure 6: is an exploded view of the guide with a burr cutter; and

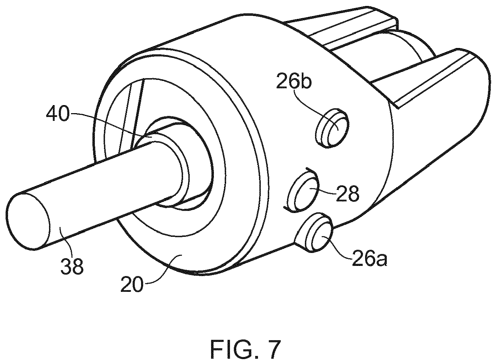

- Figure 7: is a rear view of the guide assembled

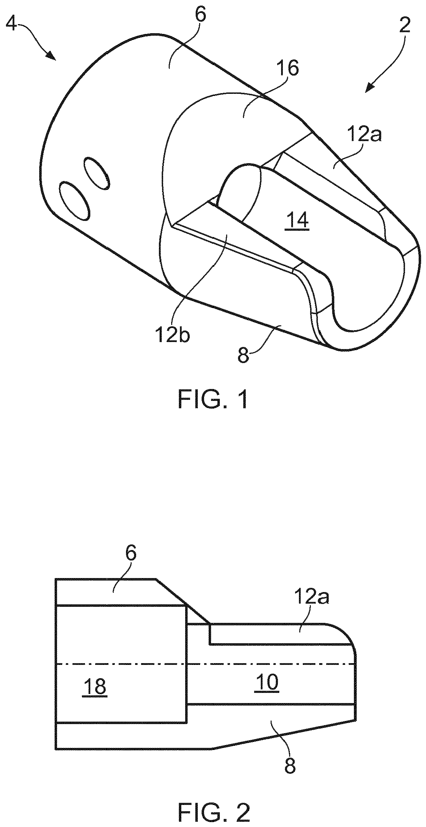

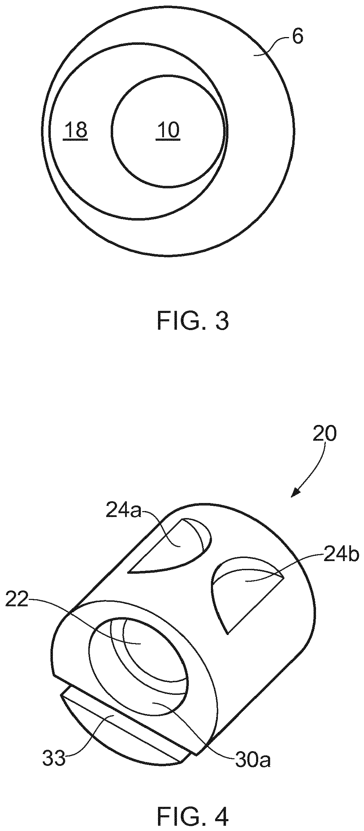

Figure 1 shows an example of a guide 2 for a burr cutter. The guide 2 comprises a body portion 4 having a cylindrical rear section 6 and a frustoconical front section 8 tapering from the cylindrical section 6. As shown in Figures 2 and 3, a cylindrical throughbore 10 passes through both the cylindrical section 6 and the frustoconical section 8.

The frustoconical section 8 has an angular extent which is less than 360°, but slightly greater than 180°. In effect, the frustoconical section 8 has a conic section removed which is parallel to, but offset from, its axis of symmetry. The frustoconical section 8 therefore comprises first and second guide surfaces (or sole-plates) 12a, 12b which define a slot 14 between the first and second guide surfaces 12a, 12b. The first and second guide surfaces 12a, 12b lie in the same plane which is parallel to the axis of the throughbore 10. The first and second guide surfaces 12a, 12b taper along their length from the cylindrical section 6. The slot 14 runs along the length of the frustoconical section 8 and exposes the throughbore 10. As the frustoconical section 8 has an angular extent which is slightly greater than 180°, the slot 14 has a width which is slightly smaller than the diameter of the throughbore 10.

An inclined transition surface 16 is provided at the junction between the first and second guide surfaces 12a, 12b and the cylindrical section 6.

As shown in Figures 2 and 3, an enlarged opening 18 is provided in the rear of the cylindrical section 6. The enlarged opening 18 is coterminous with the throughbore 10, but has a larger diameter than the throughbore 10 and its centre is offset from that of the throughbore 10, as best shown in Figure 3.

The enlarged opening 18 is sized to receive an insert or sleeve 20, as shown in Figure 4. The sleeve 20 is cylindrical and has an outer diameter which is sized to fit within the enlarged opening 18. A throughbore 22 is formed through the sleeve 20. The axis of the throughbore 22 is parallel to, but offset from, the axis of the sleeve 20. The throughbore 22 is therefore eccentrically positioned within the sleeve 20. The offset of the throughbore 22 relative to the sleeve 20 corresponds to the offset of the throughbore 10 relative to the opening 18.

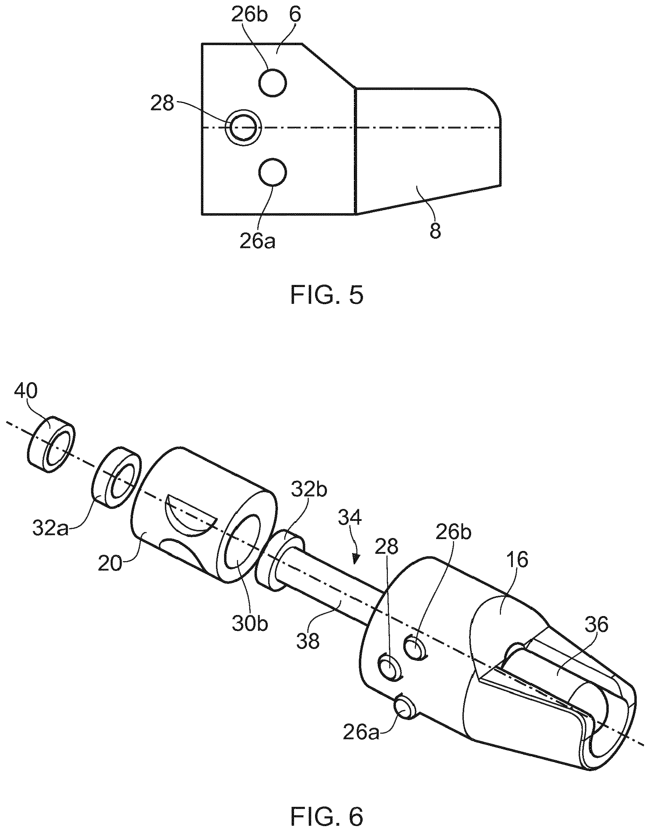

As shown in Figure 4, a pair of adjacent semi-circular flats 24a, 24b are machined into the outer surface of the sleeve 20. The flats 24a, 24b are axially aligned, but are spaced around the circumference of the sleeve 20 from one another. As shown in Figure 5, the cylindrical section 6 comprises a pair of adjustment screws 26a, 26b (e.g. grubscrews) which extend into the opening 18. The adjustment screws 26a, 26b are spaced from one another about the circumference of the cylindrical section 6 by a distance which corresponds to the spacing of the flats 24a, 24b.

With the sleeve 20 received in the opening 18 in the proper orientation, the adjustment screws 26a, 26b can therefore be brought into contact with the surface of the flats 24a, 24b. In this orientation, the throughbore 22 of the sleeve 20 substantially aligns with the throughbore of the body portion 4. The angular positon of the sleeve 20 within the body portion 4 can be adjusted somewhat by tightening one of the adjustment screws 26a, 26b and loosening the other of the adjustment screws 26a, 26b. Owing to the eccentric positioning of the throughbore 22, the rotation of the sleeve 20 within the opening 18 creates an offset between the centres of the throughbores 10 and 22. Specifically, the rotation of the sleeve 20 raises or lowers the centre of the throughbore 22 thereby reducing or increasing a distance between the centre of the throughbore 22 and the guide surfaces 12a, 12b. When the sleeve 20 is in the desired position, a locking screw 28 (e.g. a grubscrew) threaded into a bore in the cylindrical section 6 may be engaged with the sleeve 20 to prevent further rotation of the sleeve 20.

A recess 30a, 30b is provided around the opening of the throughbore 22 at either end of the sleeve 20. The recesses 30a, 30b are sized to receive a pair of bearings 32a, 32b (see Figure 6). An external end surface of the sleeve 20 is provided with a slot 33 which helps obtain proper alignment of the sleeve 20 during insertion into the opening 18 and during adjustment of the adjustment screws 26a, 26b.

As shown in Figure 6, the guide 2 receives a cylindrical burr cuter 34 having a cutting head 36 and a shank 38 (forming a tool). In the example shown, the cylindrical burr cutter has a radiused (ball) end, although flat-ended cutters may be used instead. The burr cutter 34 is received so that the cutting head 36 is aligned with the slot 14 with the frustoconical section 8 concealing the majority of the cutting head 36. The shank 38 extends through the throughbore 22 of the sleeve 20 and from the rear of the guide 2 where it can be engaged for rotation by a rotary tool. The shank 38 passes through the bearings 32a, 32b which rotatably mount the guide 2 to the burr cutter 34 with the cutting head 36 free to rotate without contacting the guide 2.

A locking ring 40 engages with the shank 38 via a grubscrew to fix the axial position of the burr cutter 34 within the guide 2.

As described previously, the adjustment screws 26a, 26b can be used to adjust the angular positon of the sleeve 20 within the body portion 4. The rotation of the sleeve 20 raises or lowers cutting head 36 relative to the guide surfaces 12a, 12b. In particular, as viewed in Figure 6, the sleeve 20 may be rotated in a clockwise direction by tightening the lower adjustment screw 26a and loosening the upper adjustment screw 26b, thereby lowering the cutting head 36. Conversely, the sleeve 20 may be rotated in an anticlockwise direction by tightening the upper adjustment screw 26b and loosening the lower adjustment screw 26a, thereby raising the cutting head 36. The adjustment screws 26a, 26b are used to ensure that the guide surfaces 12a, 12b are flush with the top of the cutting head 36. In other words, the plane of the guide surfaces 12a, 12b is tangential to the cutting head 36. Accordingly, a planar workpiece supported on the guide surfaces 12a, 12b will not make contact (or negligible contact) with the cutting head 36 of the burr cutter 34. However, any material which extends out of the plane of the remainder of the workpiece will be brought into contact with the cutting head 36 causing the material to be removed.

The guide 2 and burr cutter 34 may be used to dress a weld joining an aerofoil vane to an aerofoil stub which projects from an inner ring. The guide surfaces 12a, 12b are applied to the workpiece and will sit on the "parent" aerofoil surface unless excess material is present in the region of the cutting head 36. The bearings 32a, 32b allow the guide 2 to rotate such that the guide surfaces 12a, 12b are both brought into contact with the workpiece.

Rotation of the burr cutter 34 causes any excess material to be removed until the guide surfaces 12a, 12b contact the adjacent parent material. The operator can move the tool in a span-wise direction to remove excess material and blend a flat surface across the weld into the adjacent aerofoil leading edge surfaces. The operator can then alter the angle at which the tool is applied to create additional "flats" across the weld. When sufficient "flats" have been created then the adjacent leading edge shapes will have been adequately replicated or interpolated across the weld.

The guide surfaces 12a, 12b always adjust to the aerofoil surfaces and prevent any undercutting or removing of parent material since they are level with the cutting head 36. The tool automatically interpolates the shape between the stub and vane and applies this across the weld smoothly and with the minimum of operator skill. This creates a better leading edge shape in this region leading to improved engine performance, efficiency and reduced fuel burn.

The operator can apply sufficient force to the tool to remove excess material safe in the knowledge that parent material cannot be removed and that the tool will control the depth of cut. Consequently, the guide 2 reduces operator stress and increases the speed of operation.

The guide 2 also forms a guard which prevents the operator from accidentally contacting the cutting head 36.

Although in the example shown the burr cutter 34 is removable from the guide 2 allowing the burr cutter 34 to be replaced when necessary, in other examples, the guide 2 may be integrally formed with the burr cutter 34.

It will be appreciated that the guide 2 may have a very different form from that shown and described above. In particular, the body portion 4 need not have a cylindrical section and a conical section. The body portion 4 also need not encircle the cutting head 36 except for the slot 14 and may instead have a more open design with the guide surfaces 12a, 12b formed by a plate or the like. The guide surfaces 12a, 12b may also be contiguous.

The guide 2 need not have the eccentric sleeve 20 described previously and adjustment of the position of the cutting head 36 relative to the guide surfaces 12a, 12b may be achieved in other manners using other adjustment mechanisms. In particular, the height of the guide surfaces 12a, 12b may be varied to adjust the distance between the guide surfaces 12a, 12b and the axis of rotation of the burr cutter 34. Alternatively, the guide 2 and burr cutter 34 may be manufactured and assembled with sufficient accuracy that no adjustment is required during use.

The tool described herein by way of non-limitative example may be used to remove unwanted material from an aerofoil in a controlled manner, thereby accurately and reliably achieving a desired shape of the remaining surface.

The invention is not limited to the embodiments described herein, and may be modified or adapted without departing from the scope of the present invention.

## Claims

1. A tool comprising a burr cutter and a guide for the burr cutter, wherein:
the burr cutter comprises a cutting head and a shank; and
the guide comprises:
a body portion having first and second guide surfaces which are spaced from one another to define a slot between the first and second guide surfaces;
a bearing for rotatably mounting the body portion to the shank of the burr cutter with the cutting head of the burr cutter adjacent the slot;
wherein the first and second guide surfaces and the bearing are positioned relative to one another such that the first and second guide surfaces are flush with the cutting head of the burr cutter and tangential to the part of the cutting head that lies in the plane of the first and second guide surfaces.

2. A tool as claimed in claim 1, wherein the guide further comprises an adjustment mechanism configured to translate a rotational axis of the bearing relative to the first and second guide surfaces.

3. A tool as claimed in claim 2, wherein the adjustment mechanism comprises a sleeve which is received by the body portion, wherein the sleeve comprises a throughbore for receiving the bearing and wherein the throughbore is eccentrically positioned within the sleeve such that rotation of the sleeve relative to the body portion translates the rotational axis of the bearing relative to the first and second guide surfaces.

4. A tool as claimed in claim 3, wherein the sleeve has a circular outer profile and the body portion comprises a complementary circular recess for receiving the sleeve.

5. A tool as claimed in claim 4, wherein the circular outer profile of the sleeve comprises first and second flat portions, the adjusting mechanism further comprising first and second adjustment screws which pass through the body portion and engage the first and second flat portions of the sleeve so as to cause the sleeve to rotate relative to the body portion.

6. A tool as claimed in any preceding claim, wherein the body portion of the guide defines an exterior surface which extends from the first guide surface to the second surface so as to form a throughbore for receiving the cutting head, the throughbore being open at the slot.

7. A tool as claimed in claim 6, wherein the exterior surface of the guide is conical.

8. A method for manufacturing an aerofoil for a gas turbine engine comprising:
manufacturing an unfinished aerofoil; and
removing unwanted material from the unfinished aerofoil using the tool according to any one of claims 1 to 7.
